# EUROPEAN PATENT SPECIFICATION

(11) **EP 1 950 857 B1**
(45) Date of publication and mention of the grant of the patent: **18.04.2012**
(21) Application number: 07425035.8
(22) Date of filing: 24.01.2007
(51) Int. Cl.: H02G 3/04

(54) **Modular protective cover with severable sections for electrical ducting**
Modulare Schutzhülle mit mehreren trennbaren Abschnitten für elektrische Leitungen
Couvercle de protection modulaire doté de sections séparables pour des conducteurs électriques

(43) Date of publication of application: 30.07.2008
(73) Proprietor: Bticino S.p.A., 20154 Milano (IT)
(72) Inventor: Fabrizi, Fabrizio, 24100 Bergamo (IT)
(74) Representative: Perani, Aurelio

(56) References cited:
- US-A1- 2005 120 652
- US-A1- 2006 151 209

## Description

This invention relates to a protective cover with severable sections for electrical ducting as defined in the preamble of claim 1.

Electrical ducting for installation beneath floors or walls made of straight modular conduit members of predetermined length, for example 1, 2, 4 metres, closed off by a cover, also formed of modular elements, of metal sheet or plastics material, snap fitted to the conduit members, have been known for a long time.

Such ducting is suitable for the connection of electrical equipment at any point along its length through the insertion, into the ducting, of electrical plugs or sockets which connect to the conductors housed within the ducting.

However, in order to perform this operation a whole modular unit of the cover has to be removed and a portion, generally an intermediate portion, sufficient to permit insertion of the electrical connection member, socket or plug into the ducting has to be cut off.

The operation is laborious and if adequate tools are not available is also inaccurate.

In order to simplify the installation process US2006/0151209 describes a raceway comprising a base plate and a protective cover.
The protective cover has side members extending over the entire length of the cover and terminating in engaging teeth snap fittable on a base plate.
Both the base plate and the protective cover have "lines of weakening", no better specified, at intervals along their length.

The lines of weakening ease, at some extent, the severing of the base plate and of the cover sections, in the course of the installation process, but are unsuitable, in particular for severing cover sections, once the protective cover has been installed and removal of an entire cover module from the installation is required for severing cover sections, by means of shears, as suggested in fig. 4c of the document.

This invention as defined in claim 1 overcomes this problem and provides a modular protective cover for electrical ducting which has transverse incisions and material removed at regular intervals of predetermined length which through weakening the cross-section make it easy to remove a specific portion or length of the modular cover corresponding to the length of that interval or multiples thereof by hand or using simple tools.

This is without the need for special tools, apart from the use of ordinary pliers, and without any need for temporarily removing the entire cover module.
Advantageously the modular units of the cover are also provided with a grippable fin which further eases the operation of separating the section which has to be removed from the rest of the cover.
Features and advantages of the invention will be more apparent from the following description of a preferred embodiment with reference to the appended drawings in which:
- Figure 1 is an exploded perspective view of a preferred embodiment of the modular ducting unit and its corresponding cover,
- Figure 2 is a transverse cross-section through the modular ducting unit in Figure 1 and the corresponding cover, fitted onto the ducting, corresponding to the cross-section of the cover which has been weakened through incision and the removal of material.
With reference to Figures 1 and 2, a ducting unit in general comprises an extruded support 1 of insulating material in which a plurality of rectilinear slots opening onto one side of the support are formed.
A corresponding plurality of conducting bars 2, 3, 4, 5, advantageously coextruded with insulating support 1, are housed in the slots
According to a preferred embodiment which is the subject matter of European patent application EP1750342 filed on the 4/8/2005 (to which reference should be made for further details which are not essential to this invention), the slots are hermetically sealed by a perforatable plastics sheet 6, extruded or welded (by heat or ultrasound) over the entire surface of support 1 onto which the slots open.
Support 1 together with all its bottom part is housed in a metal enclosure 7 with bent sides 8, 9 which leaktightly engage corresponding lips 10, 11 extending along the sides of support 1.
At the top support 1 is protected by a removable covering 12, obtained by extruding plastics material and provided with side members 13, 14 terminating in engaging teeth 15, 16 which, thanks to the relative resilience of the plastics material form a snap connection with a second pair of lips 17, 18 extending along the sides of support 1.
In the embodiment described cover 12 has the sole function of protecting support 1, in particular insulating plastics sheet 6, against which it is located, from mechanical forces which might damage it.
In other similar ducting members in which the insulating plastics sheet is absent cover 12 specifically has the function of closing off the spaces and preventing accidental contact with the conducting bars, as well as the ingress of extraneous materials into the spaces.
It is clear that in both cases it is necessary to remove the cover in order to make an electrical connection to the conducting bars, while the insulating sheet, if present, can be easily perforated by contact blades or clamps.
According to this invention, in order to easily make an electrical connection to conducting bars 2, 3, 4, 5 in support 1 without having to remove cover 12 the latter is provided with transverse incisions 19, 20 which reduce its thickness at regular intervals of predetermined size along its length (for example 89 mm, corresponding to the longitudinal dimension of an electrical plug which has to be inserted in support 1), at which points side members 13, 14 with corresponding teeth 15, 16 are interrupted by a cut of convenient width (for example 2-3 mm) which removes their full thickness. The operations of cutting and incision are readily performed using a press in the course of the production process.

The incision may be made on both the inner and outer faces of the cover or on only one. In particular, where aesthetic requirements so require it may be made on only the inner face.

At the cuts and incisions the remaining cross-section 27 of the material is sufficiently thin and devoid of corners so that the two adjacent parts can be separated by stressing the section with a progressive shearing stress from one extremity thereof to the other.

In order to assist this operation provision is advantageously made for a grippable fin 24, interrupted at the locations of the cuts, on at least one of the side members 13, 14 of the cover.

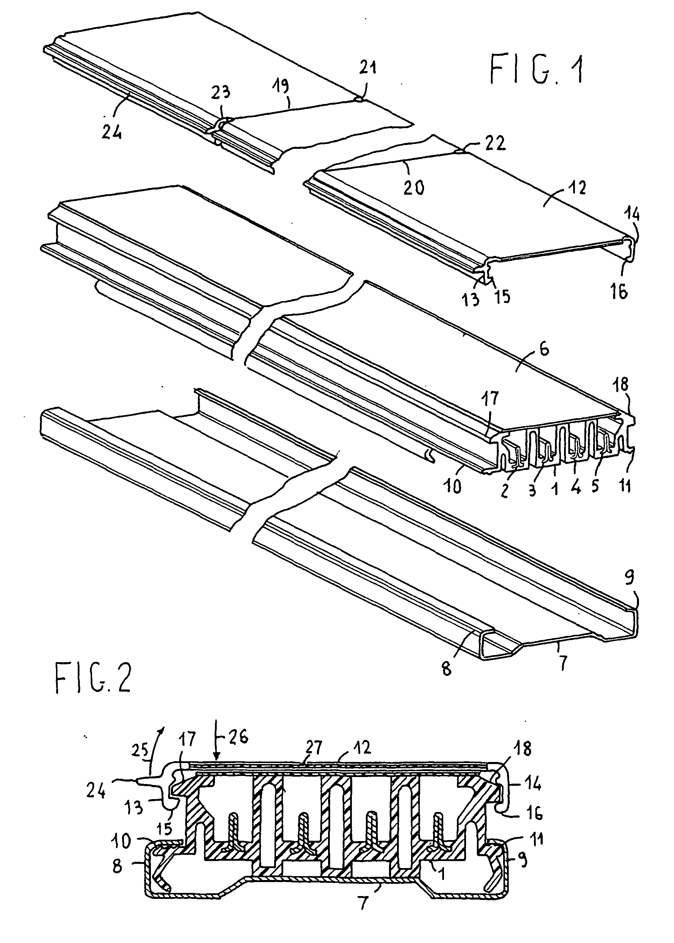

Grippable fin 24 makes it possible to exert a stress in the direction indicated by arrow 25 (Figure 2) on one of the portions of the cover adjacent to one of the notches (for example notch 19) and the corresponding cut, while the other adjacent portion is held in contact with the support exerting a pressure represented by arrow 26.

The force locally exerted on fin 24 causes tooth 15 of the cover to disengage locally from lip 17, the portion of cover so stressed to rise partly and resisting section 27 to progressively tear away.

It is clear that by carrying out this operation at two consecutive notches 19, 20 in the cover (or even at non-consecutive notches) it is possible to accurately detach a specific portion or length of the cover without having to remove the entire cover unit from the support to which it is anchored.

The above description relates to a preferred embodiment specifically for use with the ducting described, but it is clear that many variants may be made depending upon the support to which the cover has to be attached.

For example attachment teeth 15, 16 may spread outwards instead of being directed inwards to engage with corresponding supporting lips which are in turn orientated inwards.

Similarly lips 17, 18 of the support may be replaced by elastic clamps in which the ends of the side members of the cover are force fitted.

Furthermore it is not essential that the cover should be of plastics material; a cover of metal sheet may also be provided.

Aluminium or aluminium alloy are particularly indicated for this purpose on account of their relative plasticity.

In this case the separation operation may prove to be more difficult and may require the use of a tool, such as pliers for a firm hold on a grippable fin.

One final comment relates to the spaces between the incisions: these may be constant, or if the use of blocks or plugs of different size is envisaged sections of cover separated by incisions having two (or more) alternating different lengths may be provided.

## Claims

1. Protective cover (12) with severable sections for electrical ducting of the type in which the cover is provided with two bent side members (13, 14) extending over the entire length of the cover and terminating in engaging teeth (15, 16) which form a snap connection with a corresponding lip (17, 18) of a unit of prefabricated conduit (1), said cover (12) having, at regular intervals along its length, incisions (19,20) transverse to its length on at least one of its surfaces, which incisions reduce its thickness, **characterised in that** said side members (13, 14) are interrupted, at said incisions (19,20) by cuts (21, 22, 23) which remove their full thickness whereby said cover can be pulled away at said incisions and cuts to separate off at least one length of said cover lying between two incisions from the adjacent portions of said cover.

2. Protective cover (12) according to claim 1 where said incisions (19,20) and cuts (21,22,23) leave a remaining cross section of the cover material thin and devoid of corners.

3. Protective cover according to claim 1 or 2, in which the said incision (19, 20) is present on both the inner and outer faces of said cover (12).

4. Protective cover according to claim 1, 2 or 3 in which at least one (13) of said side members (13, 14) has a grippable fin (24) along its entire length interrupted by said cuts (23), which fin (24) assists the action of separation.

## Patentansprüche

1. Schutzabdeckung (12) mit trennbaren Sektionen für eine elektrische Kabelführung von der Art, bei welcher die Abdeckung mit zwei abgebogenen Seitenteilen (13, 14) versehen ist, die sich über die gesamte Länge der Abdeckung erstrecken und in Eingriffszähnen (15, 16) enden, die eine Rastverbindung mit einer entsprechenden Lippe (17, 18) einer Einheit eines vorgefertigten Kabelkanals (1) bilden, wobei die Abdeckung (12) in regelmäßigen Intervallen über ihre Länge Einschnitte (19, 20) quer zu ihrer Länge auf wenigstens einer ihrer Oberflächen aufweist, wobei die Einschnitte ihre Dicke reduzieren,
**dadurch gekennzeichnet, daß** die Seitenteile (13,14) an den Einschnitten (19, 20) durch Ausschnitte (21, 22, 23) unterbrochen sind, welche ihre volle Dicke entfernen, wodurch die Abdeckung an den Einschnitten und Ausschnitten weggezogen werden kann, um wenigstens eine Länge der Abdeckung, die zwischen zwei Einschnitten benachbarter Abschnitte der Abdeckung liegt, abzutrennen.

2. Schutzabdeckung (12) nach Anspruch 1, wobei die Einschnitte (19, 20) und Ausschnitte (21, 22, 23) einen verbleibenden Querschnitt des Abdeckungsmaterials dünn und frei von Ecken belassen.

3. Schutzabdeckung nach Anspruch 1 oder 2, wobei sich der Einschnitt (19, 20) sowohl an der inneren als auch der äußeren Fläche der Abdeckung (12) befindet.

4. Schutzabdeckung nach Anspruch 1, 2 oder 3, wobei wenigstens eines (13) der Seitenteile (13, 14) über seine gesamte Länge eine greifbare, durch die Ausschnitte (23) unterbrochene Lamelle (24) aufweist, wobei die Lamelle (24) das Ausführen der Abtrennung unterstützt.

## Revendications

1. Couvercle de protection (12) comprenant des tronçons séparables pour une conduite électrique du type dans lequel le couvercle est pourvu de deux éléments latéraux coudés (13, 14) qui s'étendent sur l'ensemble de la longueur du couvercle et se terminent dans des dents d'engrènement (15, 16) qui forment un assemblage par encliquetage avec une lèvre correspondante (17, 18) d'une unité d'un caniveau préfabriqué (1), ledit couvercle (12) présentant, à des intervalles réguliers sur sa longueur, des incisions (19, 20) transversales à sa longueur sur au moins l'une de ses surfaces, lesdites incisions réduisant son épaisseur,
**caractérisé par le fait que** lesdits éléments latéraux (13, 14) sont interrompus, sur lesdites incisions (19, 20), par des découpes (21, 22, 23) qui enlèvent l'ensemble de leur épaisseur ce par quoi ledit couvercle peut être retiré sur lesdites incisions et découpes afin de détacher au moins une longueur dudit couvercle qui est située entre deux incisions de tronçons adjacents dudit couvercle.

2. Couvercle de protection (12) selon la revendication 1, dans lequel lesdites incisions (19, 20) et lesdites découpes (21, 22, 23) laissent une section transversale restante du matériau du couvercle, qui est mince et exempte de coins.

3. Couvercle de protection selon la revendication 1 ou 2, dans lequel ladite incision (19, 20) existe aussi bien sur la face intérieure que sur la face extérieure du couvercle (12).

4. Couvercle de protection selon la revendication 1, 2 ou 3, dans lequel au moins l'un (13) des éléments latéraux (13, 14) présente, sur l'ensemble de sa longueur, une ailette saisissable (24) qui est interrompue par lesdites découpes (23), ladite ailette (24) aide à réaliser la séparation.
